# EUROPÄISCHE PATENTSCHRIFT

(11) **EP 1 427 503 B1**
(45) Veröffentlichungstag und Bekanntmachung des Hinweises auf die Patenterteilung: **12.01.2005**
(21) Anmeldenummer: 02785124.5
(22) Anmeldetag: 19.09.2002
(51) Int. Cl.: B01D 29/11, B01D 35/30, B01D 36/04, A01K 63/04

(54) **BAUELEMENT FÜR EINE TEICHFILTERANLAGE**
COMPONENT FOR A POND FILTERING SYSTEM
COMPOSANT DESTINE A UN SYSTEME DE FILTRAGE POUR PIECE D'EAU

(30) Priorität: 19.09.2001 DE 10146281
(43) Veröffentlichungstag der Anmeldung: 16.06.2004
(73) Patentinhaber: Brüggert, Hannelore, 46487 Wesel (DE)
(72) Erfinder: Brüggert, Detlef, 46487 Wesel (DE)
(74) Vertreter: Füssel, Michael, Dipl.-Ing.
(86) Internationale Anmeldenummer: PCT/EP2002/010496
(87) Internationale Veröffentlichungsnummer: WO 2003/024565

(56) Entgegenhaltungen:
- WO-A-02/43831
- GB-A- 2 146 255

## Beschreibung

Die vorliegende Erfindung betrifft ein Bauelement für eine Teichfilteranlage zur Reinigung von Wasser aus Zierfischbecken.

Teichfilteranlagen, die aus einzelnen Bauelementen bestehen, sind bekannt, siehe z.B. Filteranlagen-Luxus oder Notwendigkeit, in KLAN KOI Magazin, Sonderheft 1998, Seite 54-56. Eine derartige Teichfilteranlage wird aus einzelnen Bauelementen aufgebaut.

Sie weisen einen Zulaufanschluß und einen Ablaufanschluß auf. Zwischen Zulaufanschluß und Ablaufanschluß ist ein Filterblock angeordnet, welcher vom zu reinigenden Teichwasser in vorbestimmter Richtung durchströmt wird.

Das gereinigte Teichwasser wird über den Ablaufanschluß in den Teich zurückgeführt.

An derartige Teichfilteranlagen werden vielfältige Anforderungen gestellt. Sie müssen unter anderem im Wasser befindliche Schwebstoffe und Verunreinigungen herausfiltern, dienen z.B. der biochemischen Nitrifikation, der Denitrifikation und der Phosphorelimination.

Diese unterschiedlichen Filterfunktionen werden in der Regel durch eine Reihenschaltung unterschiedlicher Bauelemente erfüllt.

Der damit verbundene Bauaufwand ist erheblich, da jeweils spezifisch für die jeweiligen Aufgaben ausgelegte Bauelemente verwendet werden müssen.

Aufgabe der vorliegenden Erfindung ist es daher, ein Bauelement zur Verfügung zu stellen, welches universell für die unterschiedlichen erforderlichen spezifizierten Funktionen geeignet ist und ohne weiteres den Aufbau einer vollständigen Filteranlage mit allen erforderlichen Funktionen ermöglicht.

Diese Aufgabe löst die Erfindung mit einem Bauelement für einen Teichfilter mit den Merkmalen des Hauptanspruchs.

Aus der Erfindung ergibt sich der Vorteil, daß die gesamte Filteranlage für einen Teichfilter modulartig zusammengesetzt ist, wobei die jeweils erforderlichen spezifischen Funktionen von den einzelnen Bauelementen übernommen werden.

Durch die ringflanschförmigen Öffnungen lassen sich mehrere Bauelemente z.B. zu einer Filteranlage entsprechend großer Filterfläche zusammenschließen. Andererseits können auch mehrere Bauelemente so zusammengeschlossen werden, daß in einem ersten Bauelement eine Filterung erfolgt, beim Übergang in ein zweites Bauelement durch einen im Verbindungsstutzen angeordneten UVC-Strahler kleinste Schwebealgen verklumpt werden, die dann im zweiten Bauelement abgefiltert werden können.

Wesentliches Ziel der Erfindung ist es also, am Ausgang einer aus den einzelnen Bauelemente zusammengesetzten Filteranlage glasklares Ausgangswasser zu erhalten, indem die jeweilig anfallenden Schmutzanteile im zu filternden Wasser herausgefiltert werden. Hierzu dienen die jeweils mit verschiedenen Funktionen ausgestatteten Verbindungsstutzen, die zusätzlich zu ihrer filterspezifischen Funktion die wasserdichte Fließverbindung benachbarter Bauelemente über die Paarung aus ringflanschförmigen Öffnungen am Bauelement und ringflanschförmigen Gegenstücken am Verbindungsstutzen ermöglichen.

Es kommt daher für die vorliegende Erfindung auch auf die Kombination der am äußeren Gehäuse des Bauelements vorgesehenen ringflanschförmigen Öffnungen mit entsprechenden ringflanschförmigen Anschlüssen von Zulauf-, Ablauf- und Verbindungsstutzen an, wobei jedes Bauelement an seinem äußeren Gehäuse die entsprechenden Ringflanschanschlüsse aufweist, um daran den jeweiligen Verbindungsstutzen, den Zulaufstutzen oder den Ablaufstutzen zu befestigen.

Werden keinerlei Anschlußstutzen benötigt, lassen sich die ringflanschförmigen Öffnungen durch einfache Platten verschließen.

Zweckmäßigerweise werden die ringflanschförmigen Öffnungen durch ebene plattenförmige Stutzenanschlüsse verschlossen, die z.B. einen rechteckigen oder quadratischen Querschnitt aufweisen.

Um die anfallenden auszufilternden Feststoffe leicht entsorgen zu können, sollen die Wandungen des äußeren Gehäuses unterhalb der ringflanschförmigen Öffnungen einen spitz nach unten zulaufenden Sammelkanal begrenzen, der sich zwischen der Wandung des äußeren Gehäuses und der Wandung des inneren Gehäuses ausbildet. Dieser Sammelkanal verfügt zweckmäßigerweise über einen bedarfsweise zu öffnenden Ablaßhahn, so daß die Feststoffe dann einfach ausgespült werden können.

Da ferner der Zulaufanschluß mit dem inneren Gehäuse kommuniziert oder zweckmäßigerweise unmittelbar im inneren Gehäuse endet, muß davon ausgegangen werden, daß sich an dem im inneren Gehäuse angeordneten Filterblock vornehmlich Feststoffe ansammeln, die über eine spitz nach unten zulaufende Kontur des inneren Gehäuses einfach gesammelt werden können. Zu diesem Zweck soll an der nach unten weisenden Spitze des inneren Gehäuses ebenfalls ein Sammelkanal sich anschließen, über den die dort anfallenden Feststoffe leicht abgezogen werden können.

Zu diesem Zweck wird vorgeschlagen, daß die Wandungen jedes Bauelements unterhalb der ringflanschförmigen Öffnungen eine spitz nach unten zulaufende Pyramide bilden, deren Neigungswinkel zur Richtung der Schwerkraft nicht mehr als +/-45°, vorzugsweise nicht mehr als +/- 30° geneigt ist.

Insbesondere im letzteren Fall hat sich gezeigt, daß der an den äußeren Flächen des Filterblocks anfallende Feststoffanteil des im zu filternden Wasser befindlichen Schmutzes ohne weitere Maßnahmen an die tiefste Stelle der inneren bzw. äußeren Wandung rutscht und auf diese Weise leicht über den jeweiligen Feststoffsammler abgezogen werden kann.

Von besonderem Vorteil ist eine Paarung zweier derartiger Bauelemente, bei welchen zwei sich gegenüberliegende ringflanschförmige Öffnungen, von denen sich jeweils eines an einem Bauelement befindet, über einen gemeinsamen Verbindungsstutzen kommunizierend verbunden werden, welcher die sich zwischen dem inneren und dem äußeren Gehäuse befindlichen Kanäle verbindet und zwar so, daß die Neigungen der Wandungen von innerem und äußerem Gehäuse jeweils bis in den Verbindungsstutzen hinein fortgesetzt werden.

Auf diese Weise entsteht für diesen Sammelkanal automatisch eine höchste Stelle, die über ein entsprechendes Entlüftungsrohr entlüftet werden kann.

Die Entlüftung kann atmosphärisch oder über eine Saugpumpe erfolgen. Die sich in dem Zwischenraum zwischen innerer Wandung und äußerer Wandung aufgrund einer Vergärung der Feststoffanteile ansammelnden Faulgase können somit sicher entsorgt werden.

Insbesondere bietet die Ausbildung der erfindungsgemäßen Bauelemente mit Gehäusen, welche die Form von auf der Spitze stehenden Pyramiden aufweisen, den Vorteil, daß lediglich noch an zwei einzigen Stellen Schmutz anfallen kann, nämlich an der tiefsten Stelle des inneren Gehäuses, die über einen Sammelkanal an einem Feststoffsammler angeschlossen werden kann, und an der tiefsten Stelle des äußeren Gehäuses, die ebenfalls über einen Sammelkanal an einen Feststoffsammler angeschlossen werden kann.

Von wesentlicher Bedeutung für die Erfindung ist aber in jedem Fall das Bauelement gemäß vorliegender Erfindung, welches einen Basismodul darstellt, aus welchem die gesamte Teichfilteranlage zusammengesetzt werden kann.

Hierfür werden Ausführungsbeispiele gegeben.

Im folgenden wird die Erfindung anhand von Ausführungsbeispielen näher erläutert.

Es zeigen
- Fig.1: ein erstes Ausführungsbeispiel der Erfindung mit im Zulaufstutzen sowie im Ablaufstutzen integrierter UVC-Lampe;
- Fig.2: ein Ausführungsbeispiel der Erfindung mit vorgeschaltetem Grobfilter;
- Fig.3: den Grobfilter gemäß Fig.2 in Seitenansicht;
- Fig.4: ein Ausführungsbeispiel der Erfindung mit integriertem UVC-Strahler im Ablaufstutzen;
- Fig.5: ein Ausführungsbeispiel der Erfindung mit UVC-Strahler im Ablaufstutzen sowie Überlaufteil;
- Fig.6: ein Ausführungsbeispiel der Erfindung mit Anbauteil zur Sauerstoffanreicherung;
- Fig.7: ein Ausführungsbeispiel der Erfindung mit Belüftungsseitenteil;
- Fig.8: ein Ausführungsbeispiel der Erfindung mit angeschraubtem Einlaufteil;
- Fig.9: einen Schaumgummiblock in Ursprungszustand zur Herstellung des Filterpakets;
- Fig.10: das Filterpaket gemäß Fig.9, ausgeschnitten
- Fig.11: die Herstellung eines pyramidenförmigen Filterpakets aus einem Schaumstoffblock gemäß Fig.9 und Fig.10;
- Fig.12: ein Ausführungsbeispiel der Erfindung mit Verbindungsteil zwischen zwei erfindungsgemäßen Bauelementen;
- Fig.13: die Strömungsverhältnisse im Verbindungsteil gemäß Fig.12;
- Fig.14: ein weiteres Ausführungsbeispiel für ein Verbindungsteil, anaerob;
- Fig.15: ein Ausführungsbeispiel der Erfindung mit Verbindungsteil, aerob;
- Fig.16: ein Ausführungsbeispiel der Erfindung mit Verbindungsteil nur für den oben liegenden Kanal;
- Fig.17: ein Ausführungsbeispiel der Erfindung nur für den unten liegenden Kanal; und
- Fig.18: eine Filteranlage aus diversen Bauelementen.

Sofern im folgenden nichts anderes gesagt ist, gilt die folgende Beschreibung stets für alle Figuren.

Die Figuren zeigen ein Bauelement 1 für eine Filteranlage 2 zur Reinigung von Wasser aus Zierfischbecken.

Derartige Filteranlagen können sowohl bei Teichen als auch in der Aquaristik eingesetzt werden.

Wesentlich ist, daß jedes Bauelement 1 ein äußeres Gehäuse 3 und ein inneres Gehäuse 4 aufweist.

Das äußere Gehäuse 3 weist einen Zulaufanschluß 5 auf, der mit dem inneren Gehäuse 4 kommuniziert.

Im inneren Gehäuse 4 befindet sich ein Filterblock 7, der aus einem wasserdurchlässigen Filtermaterial besteht und der zur Wandung des inneren Gehäuses 4 einen Strömungsquerschnitt 8 freiläßt für die Sedimentation von Feststoffen, die vor dem Eintritt des zu reinigenden Wassers in den Filterblock 7 ausfallen.

Der Filterblock 7 ist von - hier - vertikal verlaufenden Kanälen durchsetzt, die sich bis zur Wandung des inneren Gehäuses 4 erstrecken und von Kanalrohren 9 gebildet werden, die mit ihren Kanalmündungen 22 im Bereich zwischen innerem Gehäuse 4 und äußerem Gehäuse 3 enden.

Zwischen innerem Gehäuse 4 und äußerem Gehäuse 3 wird ein unterer Kanal 15 gebildet, in welchem einerseits die Kanalrohre 5 münden und der andererseits mit einem Ablaufanschluß 6 kommuniziert.

Wesentlich ist, daß das äußere Gehäuse 3 über ringflanschförmige Öffnungen 10 verfügt, die zum wasserdichten Anschluß von z.B. Zulaufstutzen 11, Ablaufstutzen 12, Verbindungsstutzen 13 oder einfachen Verschlußplatten dienen. Bei den Verschlußplatten handelt es sich um einfache geschlossene Platten, um die ringflanschförmigen Öffnungen wasserdicht abzuschließen.

Der freigelassene Strömungsquerschnitt 8, der sich zwischen den nach unten weisenden Einhüllenden des Filterblocks 7 und dem inneren Gehäuse 4 einstellt, bildet einen oberen Kanal 14, der an seinem unteren Ende, also an seiner tiefsten Stelle, mit dem oberen Feststoffsammler 18 verbunden ist. Dieser kann bedarfsweise über den Ablaufhahn 19 geöffnet werden, so daß die sich an der untersten Stelle des oberen Kanals 14 ansammelnden Feststoffe abgezogen werden können.

In gleicher Weise ist der untere Kanal 15 an seiner tiefsten Stelle mit einem unteren Feststoffsammler 16 verbunden, der ggf. über den Ablaufhahn 17 geöffnet werden kann, um auch hier die sich ansammelnden Feststoffe abzuziehen.

Wesentlich ist aber in jedem Fall, daß die ringflanschförmigen Öffnungen 10 die Möglichkeit zur Anbringung von funktionsspezifischen Anschluß- und Verbindungsteilen bieten, die im folgenden noch erläutert werden sollen.

Zweckmäßigerweise sind die Öffnungen 10 durch plattenförmige Stutzenanschlüsse verschließbar, so daß bei geringem Bauaufwand ein kompatibles System von Modulen bereitgestellt werden kann, mit welchem die vielfältigsten Filtrierfunktionen erfüllt werden können.

Wesentlich ist auch, daß die Wandungen des äußeren Gehäuses 3 unterhalb der ringflanschförmigen Öffnungen 10 einen spitz nach unten laufenden Sammelkanal begrenzen, der hier als unterer Kanal 15 bezeichnet ist.

In gleicher Weise laufen die Wandungen des inneren Gehäuses 4 unterhalb des Filterblocks 7 spitz zusammen und gehen in einen Feststoffsammler 18 über, der durch das äußere Gehäuse 3 hindurchführt und ebenfalls nach außen führt.

Man erkennt, daß das Bauelement 1 einer auf die Spitze gestellten Pyramide gleicht, welche im oberen Bereich durch vertikal verlaufende Außenwände ergänzt ist, an denen sich die ringflanschförmigen Öffnungen 10 befinden.

Der Winkel, um den die Wandungen des inneren Gehäuses 4 und des äußeren Gehäuses 3 zur Vertikalen geneigt sind, sollte im Bereich von +/- 45°, vorzugsweise im Bereich von +/- 30° liegen, so daß die ausfallenden Feststoffe, die zwangsläufig vor und hinter dem Filterblock 7 anfallen, auf den Wandungen des inneren Gehäuses 4 und des äußeren Gehäuses 3 ohne zusätzliche Maßnahmen nach unten rutschen, um in den Feststoffsammler 16 bzw. 18 überzugehen.

Derartige Bauelemente 1 sollten zur Erhöhung der Kompatibilität mehrere ringflanschförmige Öffnungen 10 aufweisen, die untereinander gleich sind, so daß die jeweils an die ringflanschförmigen Öffnungen 10 anbringbaren Anschlußteile keine bevorzugte Anbringungsstelle haben, sondern lediglich im Hinblick auf die spezifische Funktion und den zur Verfügung stehenden Platz für die Filteranlage 2 anzubringen sind.

Insbesondere Fig.18 zeigt eine Vielzahl derartiger Bauelemente 1, die zu einer Filteranlage 2 kombiniert sind, wobei jedes Bauelement 1 den Grundriß eines regelmäßigen Vielecks hat, welches hier beispielhaft als Viereck dargestellt ist.

Bevorzugt werden rechteckige oder quadratische Grundrisse, um den Bauaufwand für die einzelnen Bauelemente gering zu halten.

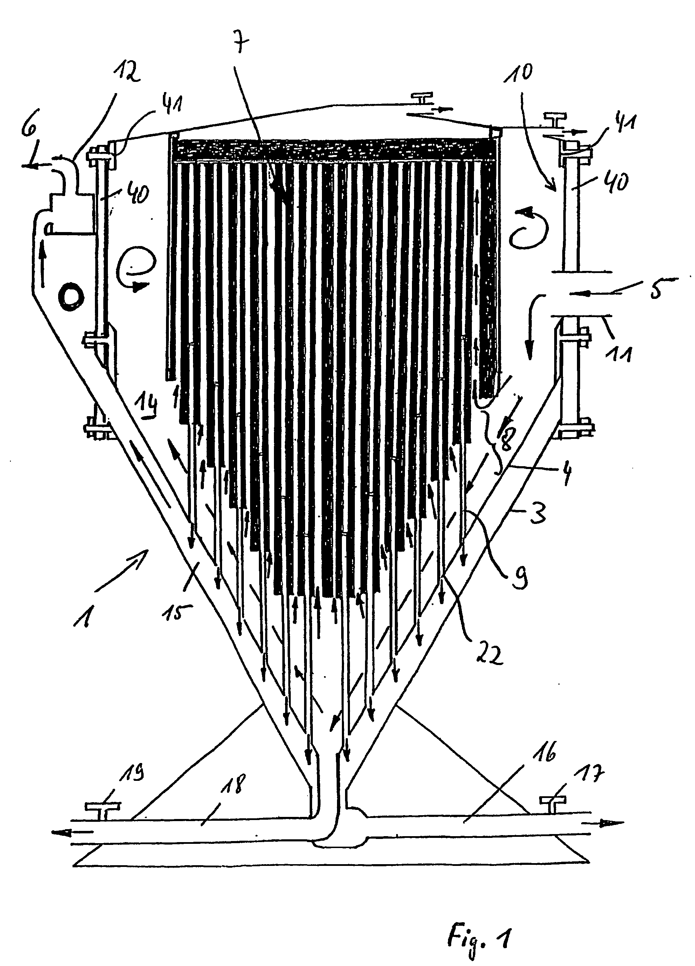

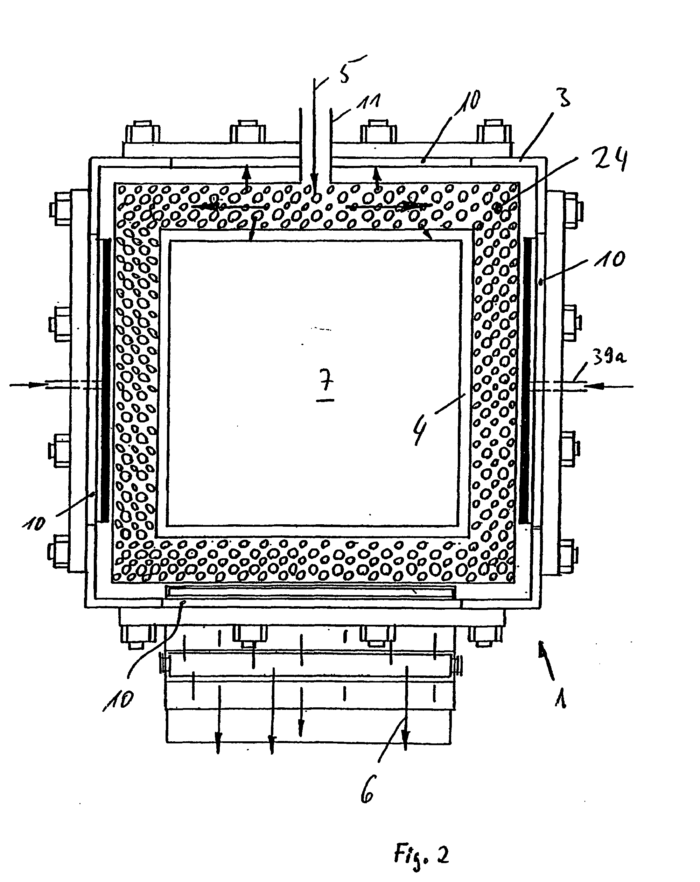

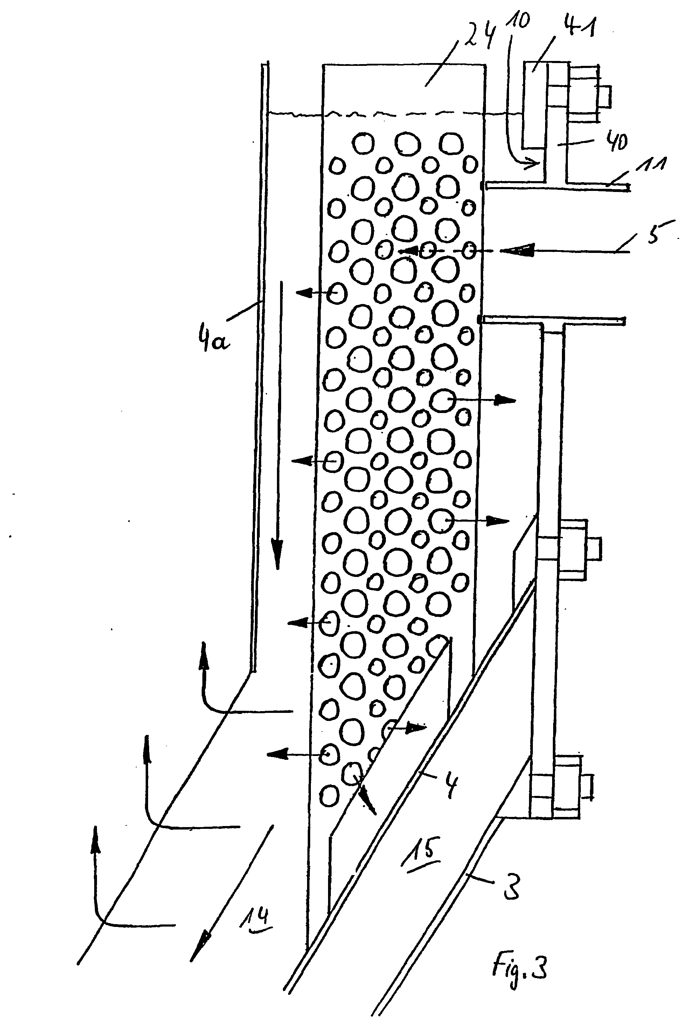

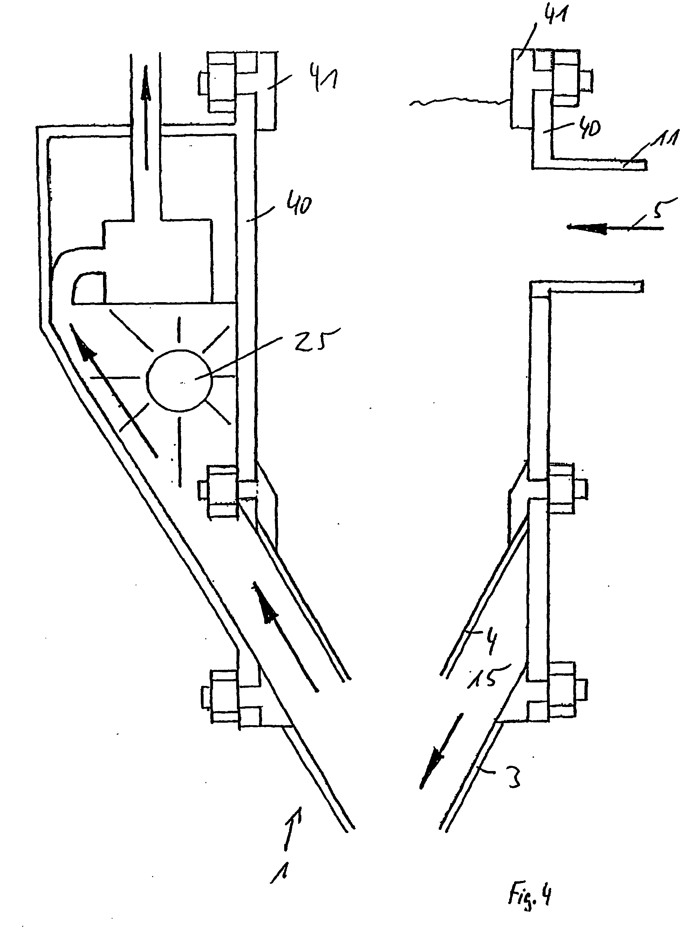

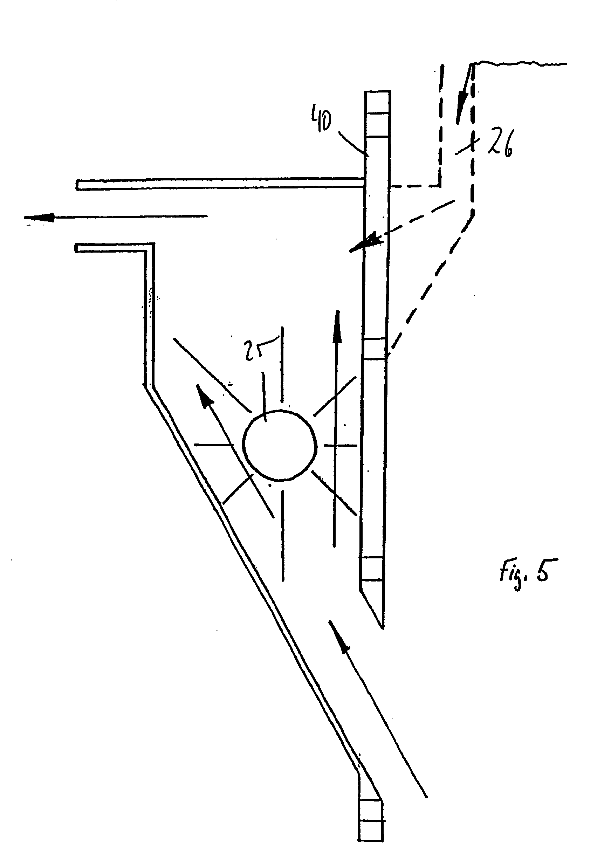

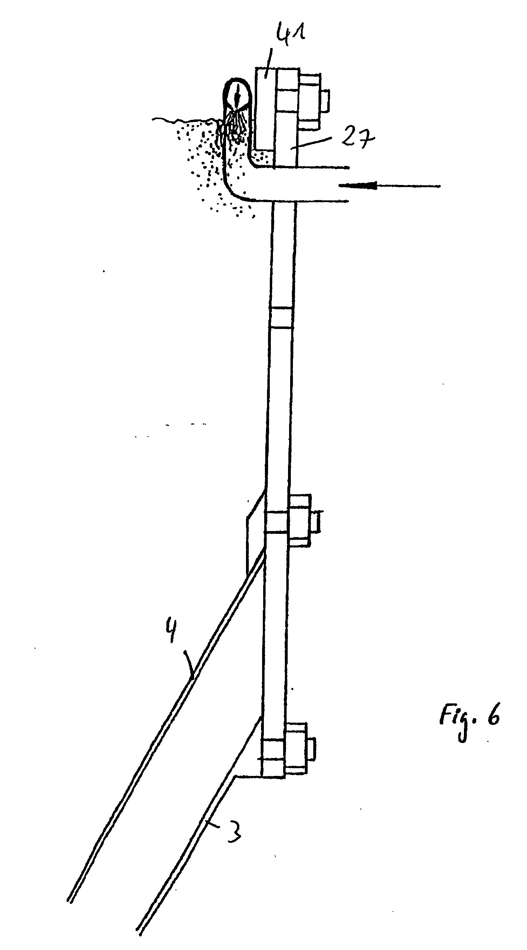

Fig.1 zeigt darüber hinaus ein Bauelement mit Verschlußdeckel. Der Deckel ist fest mit dem Gehäuse verschraubt und dichtet das obere Ende des Filterblocks 7 zu der außerhalb befindlichen Innenkammer ab, so daß bei einer Aufstellung der Filteranlage unterhalb des Wasserspiegels, wenn diese unter Druck betrieben werden muß, keine Schmutzpartikel in die Ablaufkanäle gelangen können und sich dennoch die entstehenden Gase an der höchsten Stelle ansammeln können.

Hierzu sind zwei Absperrvorrichtungen, die nicht näher bezeichnet sind, an den jeweils höchsten Punkten eingebaut, um die sich dort ansammelnden Gase absaugen zu können.

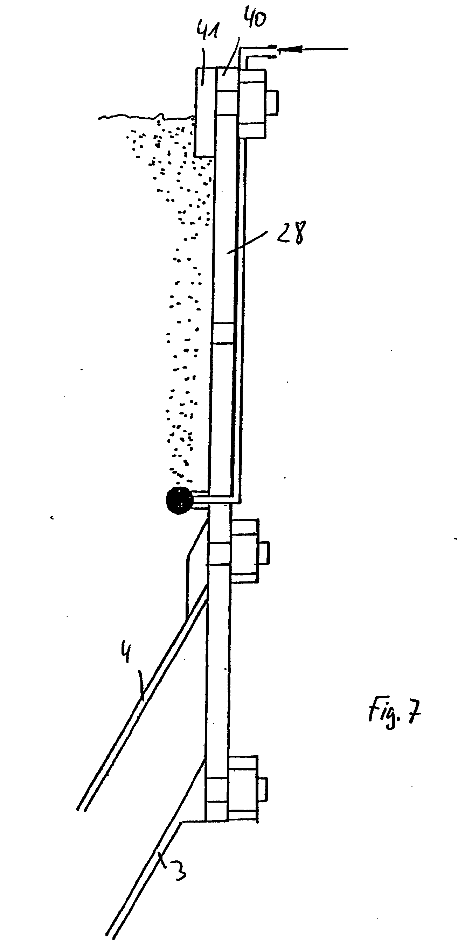

Insbesondere Fig.2 zeigt ein Bauelement 1 von quadratischem Grundriß. An jeder der Quadratseiten befindet sich eine ringflanschförmige Öffnung 10, die von einem Anschlußstutzen verschlossen wird.

Am oberen Ende ist ein Zulaufstutzen gezeigt. Am unteren Ende ist ein Ablaufstutzen gezeigt. Rechts und links sind die ringflanschförmigen Öffnungen 10 durch einfache Verschlußplatten verschlossen, die ggf. mit Belüftungsrohren 39a versehen sind, sofern für das betreffende Bauelement 1 eine aerobe Wasserbehandlung erwünscht ist.

Ergänzend hierzu zeigt Fig.2 ein Bauelement 1 mit eingebautem Grobfilter. Dieser Grobfilter 24 bietet den Vorteil, daß nur vorgereinigtes Wasser auf der ganzen Breite in den Filterblock 7 fließt, so daß Blätter und Pflanzenteile, die Zulaufkanäle nicht verstopfen können.

Ferner ist im Ablaufanschluß 6 ein UVC-Strahler vorgesehen, der sich annähernd über die gesamte Breite des Bauelements 1, zumindest aber über die Breite der ringflanschförmigen Öffnung 10 erstreckt.

Das aus dem Filterblock 7 stammende Wasser fließt daher an der ganzen Breite des UVC-Strahlers 25 vorbei und wird großflächig bestrahlt.

Da sich der UVC-Strahler unterhalb des Wasserspiegels befindet, wird er auch bei einem Pumpenausfall durch das im Bauelement 1 befindliche Wasser ausreichend gekühlt.

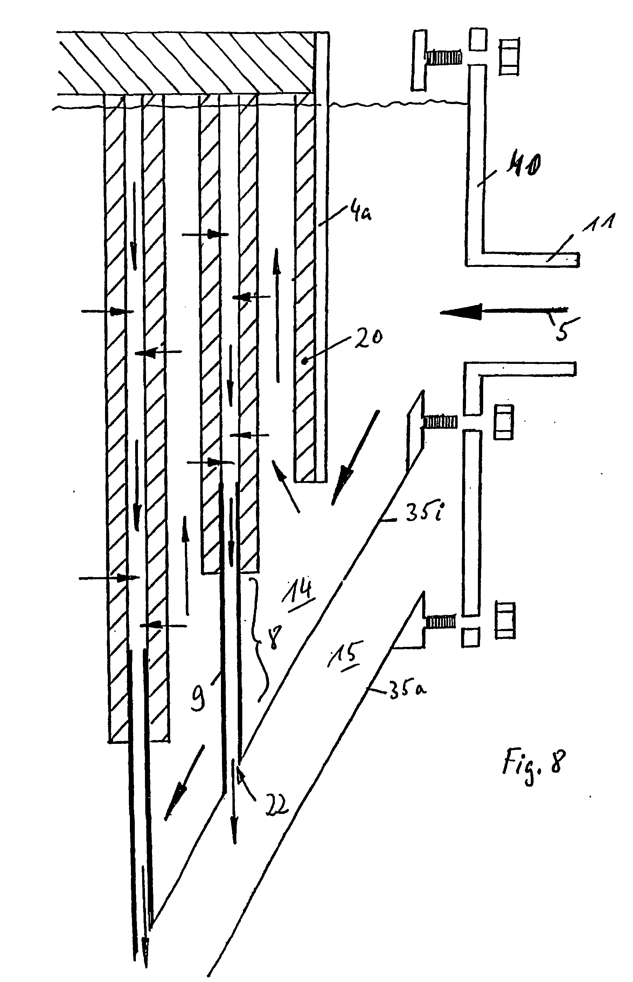

Ergänzend hierzu zeigt Fig.3 die Anordnung des Grobfilters 24 in Seitenansicht. Das untere Ende des Grobfilters entspricht der Neigung des inneren Gehäuses 4, so daß sich der Grobfilter 24 praktisch selbst innerhalb des Gehäuses zentriert. Der Grobfilter 24 sollte den oberen Kanal 14 ziemlich vollständig ausfüllen und zu allen Seiten offen sein, so daß eine große Menge an Feststoffen aufgenommen werden kann.

Zu diesem Zweck reicht er einerseits ziemlich dicht an die Umfassung 4a des Filterblocks 7 heran und andererseits dicht an den Ringflansch 41 des äußeren Gehäuses 3.

Fig.4 zeigt eine Weiterbildung der Erfindung, bei welcher das Bauelement 1 einer Schwerkraftanlage gezeigt ist. Im Auslaufbereich ist ein UVC-Strahler 25 vorgesehen, der dafür sorgt, daß feinste Schwebealgen verklumpen und anschließend ausgefiltert werden können.

Ergänzend hierzu zeigt Fig.5 eine unter Druck stehende Filteranlage mit einem Überlaufteil. Der Überlauf 26 wird von dem am oberen Ende hereinlaufenden Wasser gespeist, welches anschließend in den Einflußbereich der UVC-Lampe gerät.

Fig.6 zeigt ein Anbauteil in Form eines Deckels 27 mit Sprührohr. Das Sprührohr ist in den Deckel 27 integriert und dient der Sauerstoffanreicherung. Hierzu ist das Sprührohr oberhalb des Wasserspiegels in der Filteranlage montiert.

Ergänzend hierzu zeigt Fig.7 eine Weiterbildung mit einem Anbauteil mit integrierter Belüftung.

Hierzu kann eine Luftleitung an dem Deckel 28 vorgesehen sein, die unterhalb des Wasserspiegels im Innenbereich des Bauelements 1 mündet und vorzugsweise einen Ausströmer aufweist. Diese Bauform dient der Versorgung der außenliegenden aeroben Zonen mit Sauerstoff.

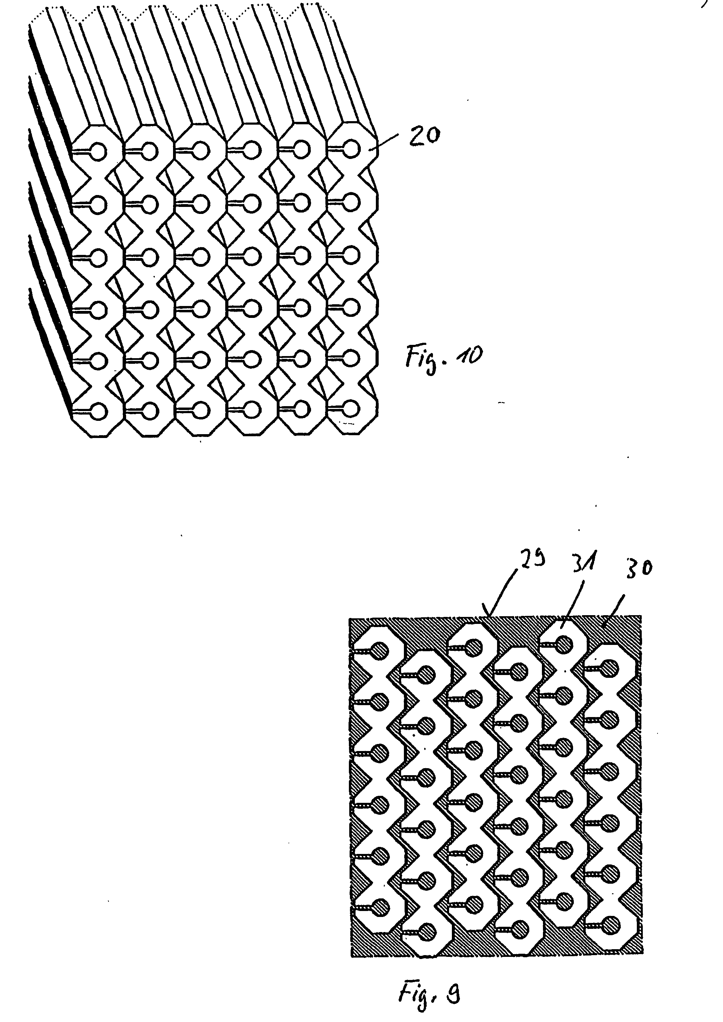

Fig.8 zeigt einen über eine Befestigungsplatte anschraubbaren Zulaufstutzen 11, der analog zum bisher gesagten über eine Ringflansch 40 mit dem äußeren Gehäuse verbundem werden kann.

Aus dem Zulaufanschluß 5 läuft das zulaufende Wasser unmittelbar in den inneren Bereich des Bauelements 1, wo sich der Filterblock 7 befindet.

Die einzelnen Filterelemente 20 stehen dicht an dicht aneinander und bilden zwischen ihren Außenflächen die Zulaufkanäle, welche von dem zulaufenden Wasser vertikal aufwärts durchströmt werden.

Da die Anlage innerhalb der Umfassung 4a des Filterblocks 7 nach oben verschlossen ist, muß das aufsteigende Wasser durch die Filterelemente 20 dringen, von wo es, dem Prinzip des geringsten Widerstandes folgend, nach unten herausfließt. Dort wird es vor dem jeweiligen Ende des Filterelements 20 von dem Kanalrohr 9 aufgenommen und durch die Wandung des inneren Gehäuses 4 hindurchgeführt in den unteren Kanal 15.

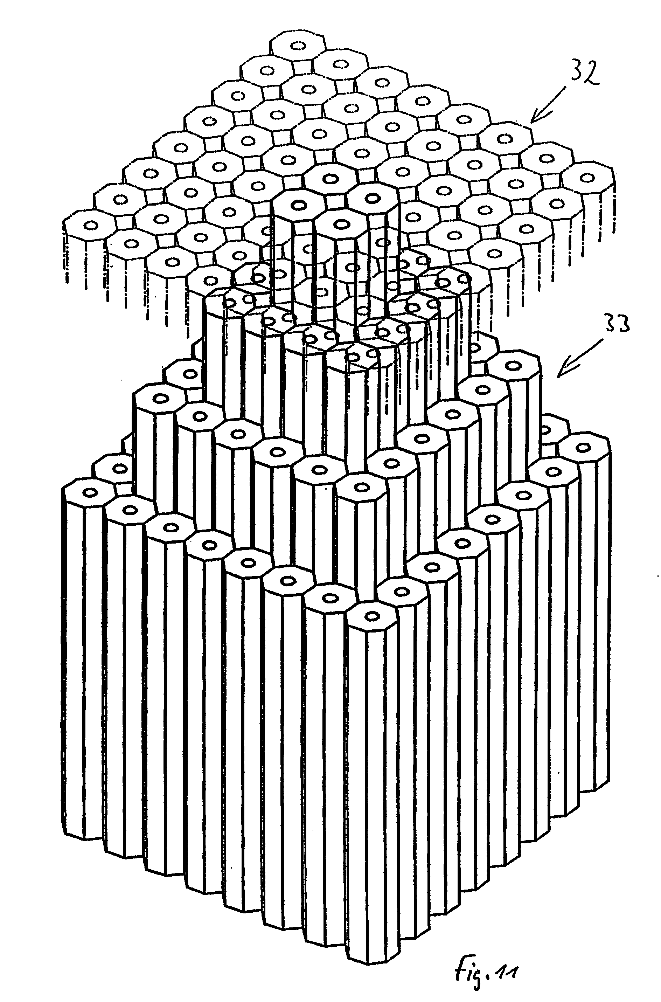

Ergänzend hierzu zeigt Fig.9 die Herstellung einzelner Filterelemente 20 aus einem Schaumstoffblock 29. Jedes einzelne Filterelement hat einen achteckigen Querschnitt. Alle Filterelemente sind gleich groß. Eine bestimmte Anzahl von Filterelementen steht jeweils in einer Reihe unmittelbar nebeneinander. Hierzu, um die halbe Teilung versetzt, stehen die Filterelemente der benachbarten Reihe mit ihren Spitzen in den Kehlen, welche durch die Filterelemente der vorangegangenen Reihe gebildet werden.

Auf diese Weise läßt sich bei geringstem Verschnitt 30 der größte Anteil von Nutzen 31 erzielen. Der Nutzen 31 bildet dabei jeweils eine Reihe von unmittelbar benachbarten Filterelementen.

Nachdem auf diese Weise eine Vielzahl von Reihen hergestellt worden ist, werden diese zueinander um jeweils eine halbe Teilung so versetzt, daß erneut ein blockförmiges Filterpaket entsteht, wie in Fig.10 gezeigt.

Dieses blockförmige Filterpaket kann anschließend durch einfache Trennschnitte quer zur Längsrichtung der einzelnen Filterelemente 20 zu einer Pyramidenform 33 umgeformt werden, die aus dem vorher vorhandenen Quader 32 gebildet wird.

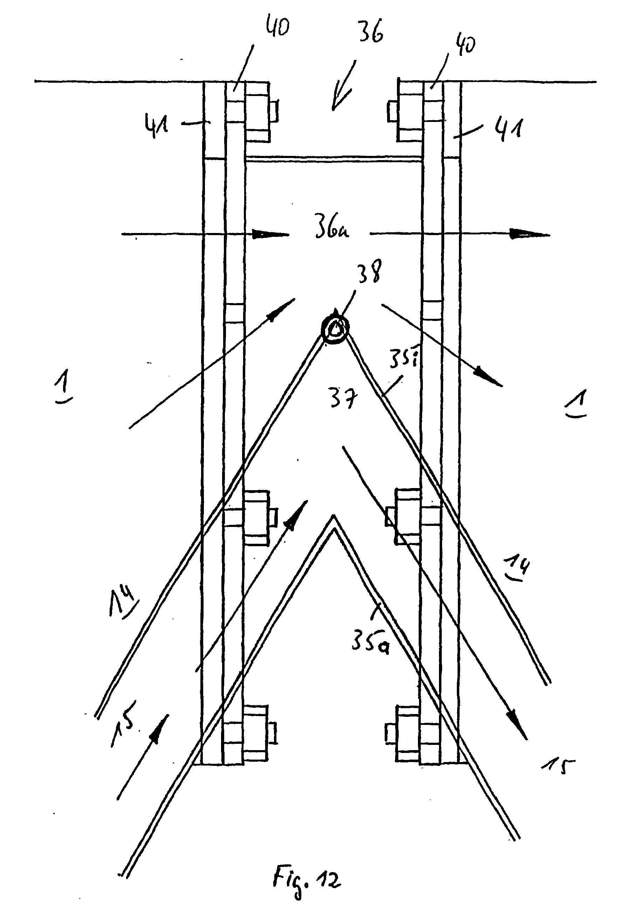

Fig.12 zeigt darüber hinaus ein wesentliches Verbindungsteil zur Kombination der Bauelemente 1 nach dieser Erfindung zu einer Filteranlage 2. Es handelt sich um ein Verbindungsstück 36, welches die oberen Kanäle 14 zweier benachbarter Bauelemente 1 durch einen oberen Verbindungskanal 36a und die unteren Kanäle 15 dieser benachbarten Bauelemente durch einen unteren Verbindungskanal 37 miteinander verbindet.

Der obere Verbindungskanal 36a hat hier keine Verbindung zur Umgebungsluft. Der obere Verbindungskanal 36a wird daher anaerob betrieben.

Der untere Verbindungskanal 37 verfügt über ein Entlüftungsrohr 38, welches mit der Umgebung kommuniziert.

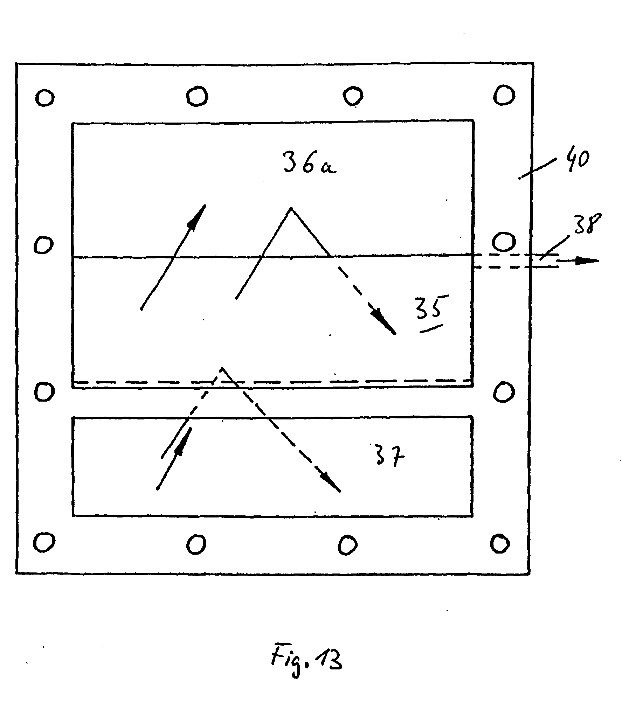

In der Draufsicht gemäß Fig.13 ist erkennbar, daß das Entlüftungsrohr 38 über die äußerste Begrenzungslinie des Ringflansches 40 nach außen führt und auf diese Weise mit der Umgebung kommunizieren kann.

Abweichend hiervon zeigen die Fig.14 bis 17 weitere Ausgestaltungen derartiger Verbindungsstutzen.

Insbesondere zeigt Fig.14 einen Verbindungsstutzen gemäß Fig.12 als Einzelteil.

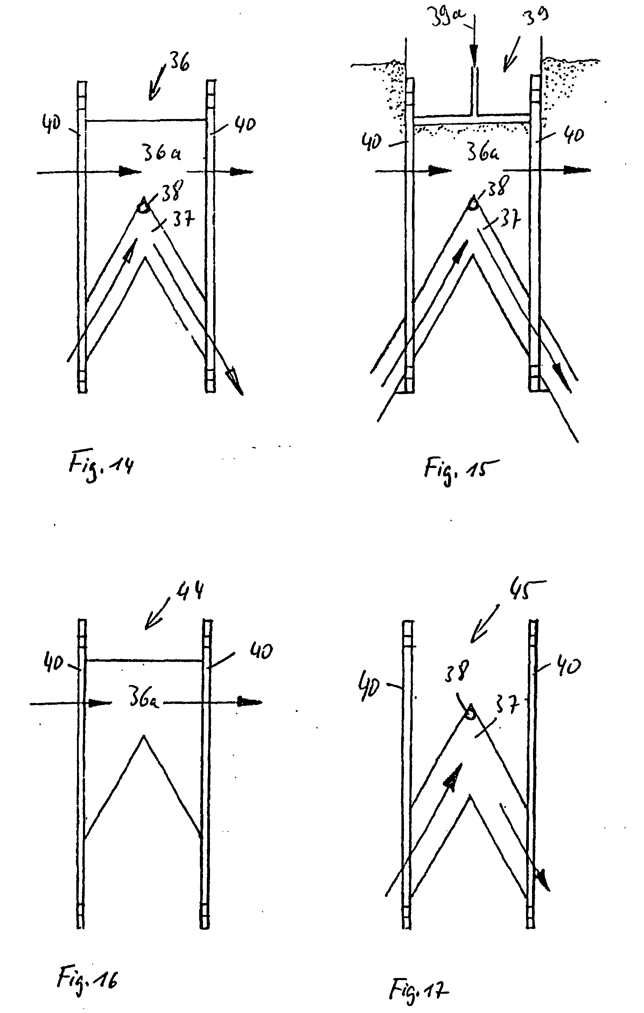

Fig.15 zeigt einen Verbindungsstutzen 39, der darüber hinaus im Bereich des oberen Verbindungskanals 36a über das Belüftungsrohr 39a mit der Umgebungsluft kommunizieren kann.

Fig.16 zeigt einen Verbindungsstutzen 44, der lediglich der Verbindung der oberen Kanäle 14 dient, während die unteren Kanäle 15 an den angrenzenden Bauelementen 1 von den Seitendeckeln des Verbindungsstutzens 44 verschlossen bleiben.

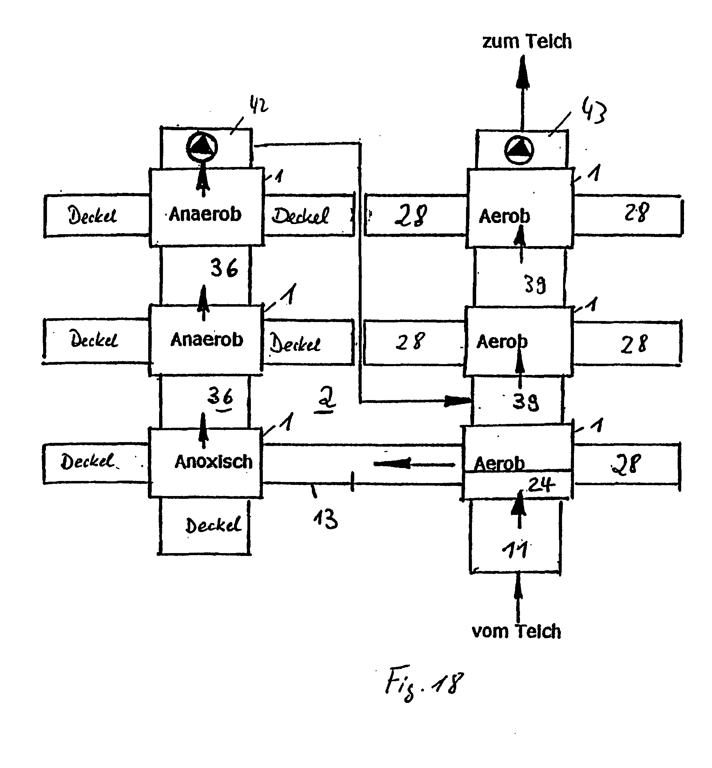

Hingegen zeigt Fig.17 einen Verbindungsstutzen 45, der ausschließlich der Verbindung der unteren Kanäle 15 dient, während die oberen Kanäle 14 durch die Seitenplatten des Verbindungsstutzen 45 verschlossen bleiben.

Ergänzend hierzu zeigt Fig.18 die Kombination einer Vielzahl derartiger Bauelemente 1 mit den jeweiligen Anschlußteilen. Die dort gezeigten Bezugszeichen stimmen mit den bisher genannten Bezugszeichen überein.

Ergänzend hierzu befindet sich am oberen der linken Spalte ein Anschlußstutzen 42 mit einer Absaugpumpe kleiner Leistung, da man für die vorgeschaltete Anaerobbehandlung des zu filternden Wassers praktisch keine Strömungsgeschwindigkeiten erzeugen will.

Dieser Anschlußstutzen ist mit einer Verbindungsleitung zu dem aerob arbeitenden Teil der Filteranlage verbunden.

Am oberen Ende des aerob arbeitenden Teils der Filteranlage ist wiederrum ein Anschlußstutzen mit einer Absaugpumpe großer Leistung vorgesehen.

Es soll jedoch ausdrücklich herausgestellt werden, daß die gezeigten Ausführungsbeispiele keinesfalls eine Beschränkung der Erfindung darstellen können, sondern nur als Beispiele dienen, um die Vielzahl von Kombinationsmöglichkeiten, welche die Erfindung bietet zu erläutern.

### Bezugszeichenaufstellung

- 1: Bauelement
- 2: Filteranlage
- 3: äußeres Gehäuse
- 4: inneres Gehäuse
- 4a: Umfassung des Filterblocks
- 5: Zulaufanschluß
- 6: Ablaufanschluß
- 7: Filterblock
- 8: freigelassener Strömungsquerschnitt
- 9: Kanalrohr
- 10: ringflanschförmige Öffnung
- 11: Zulaufstutzen
- 12: Ablaufstutzen
- 13: Verbindungsstutzen
- 14: oberer Kanal
- 15: unterer Kanal
- 16: unterer Feststoffsammler
- 17: Ablaufhahn
- 18: oberer Feststoffsammler
- 19: Ablaufhahn
- 20: Filterelement
- 22: Kanalmündung
- 24: Grobfilter
- 25: UVC-Lampe
- 26: Überlauf
- 27: Deckel mit Sprührohr
- 28: Deckel mit Belüftungsrohr
- 29: Schaumstoffblock
- 30: Verschnitt
- 31: Nutzen
- 32: Quader aus Filterelementen
- 33: Pyramide aus Filterelementen
- 35a: äußere Kanalwand im Verbindungsstutzen
- 35i: innere Kanalwand im Verbindungsstutzen
- 36: anaerober Verbindungsstutzen mit oberem Kanal und unterem Kanal
- 36a: oberer Verbindungskanal
- 37: unterer Verbindungskanal
- 38: Entlüftungsrohr
- 39: aerober Verbindungsstutzen mit oberem Kanal und unterem Kanal
- 39a: Belüftungsrohr
- 40: Ringflansch, Stutzen
- 41: Ringflansch, Gehäuse
- 42: Stutzen mit Absaugpumpe kleiner Leistung
- 43: Stutzen mit Absaugpumpe großer Leistung
- 44: Verbindungsstutzen, nur oberer Kanal
- 45: Verbindungsstutzen, nur unterer Kanal

## Patentansprüche

1. Bauelement (1) für eine Teichfilteranlage (2) zur Reinigung von Wasser aus Zierfischbecken, wobei das Bauelement (1) ein äußeres Gehäuse (3) mit Zulaufanschluß (5) und Ablaufanschluß (6) sowie ein inneres Gehäuse (4) zur Aufnahme eines Filterblocks (7) aufweist, wobei der Zulaufanschluß (5) mit dem inneren Gehäuse (4) kommuniziert und wobei der Filterblock (7) aus wasserdurchlässigem Material besteht, einen Strömungsquerschnitt zur Wandung des inneren Gehäuses (4) freiläßt und von Kanälen durchsetzt ist, die sich bis zur Wandung des inneren Gehäuses (4) erstrecken und die Wandung des inneren Gehäuses (4) durchstoßen und wobei die Kanäle mit ihren Mündungsöffnungen im Bereich zwischen innerem und äußerem Gehäuse enden und wobei dieser Bereich mit dem Ablaufanschluß (6) kommuniziert und das äußere Gehäuse (3) über ringflanschförmige Öffnungen (10) verfügt, die zum wasserdichten Anschluß von Zulauf-, Ablauf- sowie Verbindungsstutzen (11,12,13) mit jeweils filterspezifischen unterschiedlichen Funktionen sowie zur Anbringung von Verschlußplatten dienen.

2. Bauelement (1) nach Anspruch 1, **dadurch gekennzeichnet, daß** die ringflanschförmigen Öffnungen (10) durch plattenförmige Stutzenanschlüsse verschließbar sind.

3. Bauelement (1) nach Anspruch 1 oder 2, **dadurch gekennzeichnet, daß** die Wandungen des äußeren Gehäuses (3) unterhalb der ringflanschförmigen Öffnungen (10) einen spitz nach unten zulaufenden Sammelkanal begrenzen.

4. Bauelement (1) nach Anspruch 3, **dadurch gekennzeichnet, daß** der Sammelkanal an einen Feststoffsammler angeschlossen ist.

5. Bauelement (1) nach einem der Ansprüche 1 bis 4, **dadurch gekennzeichnet, daß** die Wandungen des inneren Gehäuses (4) unterhalb des Filterblocks (7) spitz zulaufen und in einen Feststoffsammelkanal übergehen, der nach außen führt.

6. Bauelement (1) nach Anspruch 3 oder 5, **dadurch gekennzeichnet, daß** jede Wandung zur Richtung der Schwerkraft und nicht mehr als +/- 45° geneigt ist.

7. Bauelement (1) nach Anspruch 6, **dadurch gekennzeichnet, daß** jede Wandung zur Richtung der Schwerkraft um nicht mehr als +/- 30° geneigt ist.

8. Bauelement (1) nach einem der Ansprüche 1 bis 7, **dadurch gekennzeichnet, daß** jedes Bauelement (1) mehrere ringflanschförmige Öffnung (10)en aufweist und daß die ringflanschförmigen Öffnungen an jedem Bauelement (1) gleiche Abmessungen haben.

9. Bauelement (1) nach einem der Ansprüche 1 bis 8, **dadurch gekennzeichnet, daß** jedes Bauelement (1) den Grundriß eines regelmäßigen Vielecks hat.

10. Bauelement (1) nach einem der Ansprüche 1 bis 9, **dadurch gekennzeichnet, daß** der Filterblock (7) aus einzelnen Filterelementen besteht, die in Form einer auf der Spitze stehenden Pyramide angeordnet sind.

11. Bauelement (1) nach Anspruch 10, **dadurch gekennzeichnet, daß** die einzelnen Filterelemente mit ihrer Längsachse parallel zur Richtung der Schwerkraft ausgerichtet sind.

12. Bauelement (1) nach Anspruch 10 oder 11, **dadurch gekennzeichnet, daß** die einzelnen Filterelemente dicht an dicht unter Ausbildung von zwischen ihren Außenflächen gebildeten Zulaufkanälen zueinander stehen und daß die unteren Enden der Filterelemente von der Wandung des inneren Gehäuses einen Abstand haben.

13. Bauelement (1) nach einem der Ansprüche 1 bis 12, **dadurch gekennzeichnet, daß** zur Verbindung mehrerer Bauelement (1)e Verbindungsstutzen (13) vorgesehen sind, welche der Verbindung jeweils der inneren Gehäuse (4) dienen.

14. Bauelement (1) nach einem der Ansprüche 1 bis 12, **dadurch gekennzeichnet, daß** zur Verbindung mehrerer Bauelemente (1) Verbindungsstutzen (13) vorgesehen sind, welche der Verbindung jeweils der äußeren Gehäuse (3) dienen.

15. Bauelement (1) nach einem der Ansprüche 1 bis 12, **dadurch gekennzeichnet, daß** zur Verbindung mehrerer Bauelement (1)e Verbindungsstutzen (13) vorgesehen sind, die sowohl der Verbindung der inneren Gehäuse miteinander als auch der Verbindung der äußeren Gehäuse miteinander dienen.

16. Bauelement (1) nach Anspruch 15, **dadurch gekennzeichnet, daß** die Verbindung der inneren Gehäuse über eine Öffnung zur Umgebungsluft verfügt.

17. Bauelement (1) nach Anspruch 15, **dadurch gekennzeichnet, daß** die Verbindung der äußeren Gehäuse über eine Öffnung zur Umgebungsluft verfügt.

18. Bauelement (1) nach einem der Ansprüche 1 bis 17, **dadurch gekennzeichnet, daß** im Zulauf- oder Ablaufstutzen (12) eine UVC-Lampe (25) angeordnet ist.

19. Bauelement (1) nach einem der Ansprüche 1 bis 18, **dadurch gekennzeichnet, daß** jedes Bauelement (1) vertikale Außenflächen aufweist und daß die ringflanschförmigen Öffnungen an den vertikalen Außenflächen des Bauelements (1) sitzen.

## Claims

1. Component (1) for a pond filtering system (2) for cleaning water from decorative fish ponds, wherein the component (1) comprises an outer housing (3) having an inlet connection (5) and an outlet connection (6) and also comprises an inner housing (4) for receiving a filter block (7), wherein the inlet connection (5) communicates with the inner housing (4) and wherein the filter block (7) consists of water-permeable material, leaves open a cross-section of flow to the wall of the inner housing (4) and is penetrated by channels which extend up to the wall of the inner housing (4) and pierce the wall of the inner housing (4) and wherein the channels terminate with their mouth apertures in the region between the inner and outer housings and wherein this region communicates with the outlet connection (6) and the outer housing (3) has annular flange-shaped apertures (10) which serve to connect in a water-tight manner the inlet, outlet and pipe couplings (11, 12, 13) each with different filter-specific functions as well as to mount sealing plates.

2. Component (1) as claimed in Claim 1, **characterised in that** the annular flange-shaped apertures (10) can be sealed by plate-shaped connection pieces.

3. Component (1) as claimed in Claim 1 or 2, **characterised in that** the walls of the outer housing (3) beneath the annular flange-shaped apertures (10) define a collecting channel tapering downwards to a point.

4. Component (1) as claimed in Claim 3, **characterised in that** the collecting channel is connected to a solid matter collector.

5. Component (1) as claimed in any one of Claims 1 to 4, **characterised in that** the walls of the inner housing (4) taper to a point beneath the filter block (7) and become a solid matter collecting channel which leads outwards.

6. Component (1) as claimed in Claim 3 or 5, **characterised in that** each wall is inclined by no more than ± 45° with respect to the direction of gravitational force.

7. Component (1) as claimed in Claim 6, **characterised in that** each wall is inclined by no more than ± 30° with respect to the direction of gravitational force.

8. Component (1) as claimed in any one of Claims 1 to 7, **characterised in that** each component (1) comprises several annular flange-shaped apertures (10), and **in that** the annular flange-shaped apertures on each component (1) have the same dimensions.

9. Component (1) as claimed in any one of Claims 1 to 8, **characterised in that** each component (1) has the outline of a regular polygon.

10. Component (1) as claimed in any one of Claims 1 to 9, **characterised in that** the filter block (7) consists of individual filter elements which are disposed in the shape of an upside-down pyramid.

11. Component (1) as claimed in Claim 10, **characterised in that** the individual filter elements are directed such that their longitudinal axes are in parallel with the direction of gravitational force.

12. Component (1) as claimed in Claim 10 or 11, **characterised in that** the individual filter elements are located close together to form inlet channels formed between the outer surfaces of the individual filter elements, and **in that** the lower ends of the filter elements are located at a spaced distance from the wall of the inner housing.

13. Component (1) as claimed in any one of Claims 1 to 12, **characterised in that** pipe couplings (13) are provided to connect several components (1), which pipe couplings serve to connect the inner housing (4) in each case.

14. Component (1) as claimed in any one of Claims 1 to 12, **characterised in that** pipe couplings (13) are provided to connect several components (1), which pipe couplings serve to connect the outer housing (3) in each case.

15. Component (1) as claimed in any one of Claims 1 to 12, **characterised in that** pipe couplings (13) are provided to connect several components (1), which pipe couplings serve to mutually connect the inner housings and also to mutually connect the outer housings.

16. Component (1) as claimed in Claim 15, **characterised in that** the connection of the inner housings has an opening to the surrounding air.

17. Component (1) as claimed in Claim 15, **characterised in that** the connection of the outer housings has an opening to the surrounding air.

18. Component (1) as claimed in any one of Claims 1 to 17, **characterised in that** a UVC lamp (25) is disposed in the inlet or outlet couplings (12).

19. Component (1) as claimed in any one of Claims 1 to 18, **characterised in that** each component (1) comprises vertical outer surfaces, and **in that** the annular flange-shaped apertures are located on the vertical outer surfaces of the component (1).

## Revendications

1. Elément (1) pour une installation de filtrage d'étang (2) destinée à purifier l'eau de bassins pour poissons d'agrément, cet élément (1) comprenant une enveloppe extérieure (3) avec un raccord d'amenée (5) et un raccord d'évacuation (6), et une enveloppe intérieure (4) destinée à recevoir un bloc filtrant (7), le raccord d'amenée (5) communiquant avec l'enveloppe intérieure (4), le bloc filtrant (7) se composant d'une matière perméable à l'eau, laissant une section transversale d'écoulement définie avec la paroi de l'enveloppe intérieure (4) et étant traversé par des conduits qui s'étendent jusqu'à ladite paroi de l'enveloppe intérieure (4) et traversent cette paroi, les conduits débouchant avec leur ouverture dans la zone située entre les enveloppes intérieure et extérieure, cette zone communiquant avec le raccord d'évacuation (6), et l'enveloppe extérieure (3) ayant des ouvertures en forme de brides annulaires (10) qui servent au raccordement étanche à l'eau de tubulures d'amenée, d'évacuation et de liaison (11, 12, 13) avec des fonctions différentes propres au filtre et qui servent au montage de plaques de fermeture.

2. Elément (1) selon la revendication 1, **caractérisé en ce que** les ouvertures en forme de brides annulaires (10) sont aptes à être fermées par des raccords à tubulure en forme de plaques.

3. Elément (1) selon la revendication 1 ou 2, **caractérisé en ce que** les parois de l'enveloppe extérieure (3) délimitent au-dessous des ouvertures en forme de brides annulaires (10) un conduit collecteur qui a une forme conique dirigée vers le bas.

4. Elément (1) selon la revendication 3, **caractérisé en ce que** le conduit collecteur est raccordé à un collecteur de matières solides.

5. Elément (1) selon l'une des revendications 1 à 4; **caractérisé en ce que** les parois de l'enveloppe intérieure (4) ont une forme conique au-dessous du bloc filtrant (7) et se prolongent par un conduit collecteur de matières solides qui mène à l'extérieur.

6. Elément (1) selon la revendication 3 ou 5, **caractérisé en ce que** chaque paroi est inclinée de +/-45° au maximum par rapport au sens de la force de gravité.

7. Elément (1) selon la revendication 6, **caractérisé en ce que** chaque paroi est inclinée de +/-30° au maximum par rapport au sens de la force de gravité.

8. Elément (1) selon l'une des revendications 1 à 7, **caractérisé en ce que** chaque élément (1) a plusieurs ouvertures en forme de brides annulaires (10) et **en ce que** ces ouvertures en forme de brides annulaires prévues sur chaque élément (1) ont les mêmes dimensions.

9. Elément (1) selon l'une des revendications 1 à 8, **caractérisé en ce que** chaque élément (1), vu en plan, a la forme d'un polygone régulier.

10. Elément (1) selon l'une des revendications 1 à 9, **caractérisé en ce que** le bloc filtrant (7) se compose d'éléments filtrants individuels qui sont disposés en forme de pyramide renversée.

11. Elément (1) selon la revendication 10, **caractérisé en ce que** les éléments filtrants individuels sont orientés avec leur axe longitudinal parallèlement au sens de la force de gravité.

12. Elément (1) selon la revendication 10 ou 11, **caractérisé en ce que** les éléments filtrants individuels sont très rapprochés les uns des autres, en formant entre leurs surfaces extérieures des conduits d'amenée, et **en ce que** les extrémités inférieures des éléments filtrants sont espacées de la paroi de l'enveloppe intérieure.

13. Elément (1) selon l'une des revendications 1 à 12, caractérisé ce qu'il est prévu pour relier plusieurs éléments (1) des tubulures de raccordement (13) qui servent à relier les enveloppes intérieures respectives (4).

14. Elément (1) selon l'une des revendications 1 à 12, **caractérisé en ce qu'**il est prévu pour relier plusieurs éléments (1) des tubulures de raccordement (13) qui servent à relier les enveloppes extérieures respectives (3).

15. Elément (1) selon l'une des revendications 1 à 12, **caractérisé en ce qu'**il est prévu pour relier plusieurs éléments (1) des tubulures de raccordement (13) qui servent aussi bien à relier les enveloppes intérieures entre elles qu'à relier les enveloppes extérieures entre elles.

16. Elément (1) selon la revendication 15, **caractérisé en ce que** la liaison entre les enveloppes intérieures dispose d'une ouverture sur l'air environnant.

17. Elément (1) selon la revendication 15, **caractérisé en ce que** la liaison entre les enveloppes extérieures dispose d'une ouverture sur l'air environnant.

18. Elément (1) selon l'une des revendications 1 à 17, **caractérisé en ce qu'**une lampe à UVC (25) est disposée dans la tubulure d'amenée ou d'évacuation (12).

19. Elément (1) selon l'une des revendications 1 à 18, **caractérisé en ce que** chaque élément (1) présente des surfaces extérieures verticales et **en ce que** les ouvertures en forme de brides annulaires se trouvent sur les surfaces extérieures verticales de l'élément (1).
